Europäisches Patentamt

European Patent Office

Office européen des brevets

(19)

(11) **EP 1 292 062 A1**

(12) **EUROPEAN PATENT APPLICATION**

(43) Date of publication:
**12.03.2003 Bulletin 2003/11**

(51) Int Cl.⁷: **H04L 5/06**

(21) Application number: **01121607.4**

(22) Date of filing: **11.09.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Beta Research GmbH**
**85774 Unterföhring (DE)**

(72) Inventor: **Baumann, Thomas Ernst**
**80809 Mènchen (DE)**

(74) Representative: **Heselberger, Johannes**
**Bardehle, Pagenberg, Dost,**
**Altenburg, Geissler, Isenbruck,**
**Galileiplatz 1**
**81679 München (DE)**

(54) **Multiple carrier demodulation with overlapping sample ranges**

(57)     Method and system for simultaneously demodulating a signal of modulated multiple carriers with content, which may or may not be synchronous, wherein the method comprises the steps: creating overlapping sample ranges of said signal of modulated multiple carriers, transforming said overlapping sample ranges from the time domain into the frequency domain, so that an amplitude value and/or a phase value for each sample range and for each carrier are provided, and extracting said content from said amplitude and/or phase values.

2

Fig. 2

Printed by Jouve, 75001 PARIS (FR)

EP 1 292 062 A1

**Description**

The present invention relates to a method and a system for simultaneously demodulating modulated multiple carriers.

Communication systems for transmitting content often use the technique of transmitting the content from different sources or users via different carriers, also called channels. Each of these carriers lies at an arbitrary point in the available frequency spectrum and the content is modulated onto these carriers. The entirety of several carriers with different frequencies is called multi-carrier signal.

This transmission technique is more commonly known as Frequency Division Multiple Access (FDMA). In FDMA the content may be described by one or more digital symbols and each digital symbol of a user is assigned a discrete portion of the transmitted frequency spectrum so that the pieces constituting the digital symbol may be transmitted in many channels over one signal transmission medium. For the assigning of the digital symbols to a portion in the frequency spectrum several modulation techniques are known in the art. For example, the Phase Shift Keying (PSK) techniques vary the phase angle of a constant amplitude carrier in accordance with the digital intelligence from the corresponding source, the digital symbols. But there are also several other techniques known in the art for modulating the digital symbols on the carriers, such as ASK, FSK and QAM.

In the past, the transmitted content, also called data, has been recovered at a receiver using a separate PSK demodulator for each of the FDMA channels in order to provide individually accessible streams of data associated with each receiver thereof. Such a receiver implies a substantial amount of hardware and therefore implies a high software and hardware complexity.

US-Patent 3,891,803 describes a system, that is able to digitally process a given number of analog channels. The described system uses a fast fourier transformer to de-multiplex the multi-carrier signal, but the single channels after the demultiplexing process are not demodulated. This system also needs a separate demodulator for each channel and therefore also implies a high hardware complexity.

In the US-Patent 4,785,447 a single wide bandwidth demodulator is described which is able to simultaneously process different carriers. But this demodulator can only process synchronous continuous carriers.

Therefore, the object of the present invention is to overcome the drawbacks of the prior art and to provide a method and a system for simultaneously demodulating also asynchronous carriers, be they continuous or burst carriers.

This object is solved according to the present invention by a method for simultaneously demodulating a signal of modulated multiple carriers with content, wherein this method comprises the following steps:

- creating overlapping sample ranges of the signal of modulated multiple carriers,
- transforming the overlapping sample ranges from the time domain into the frequency domain, so that an amplitude value and/or a phase value for each sample range and for each carrier are provided, and
- extracting the content from the amplitude and/or phase values.

The present invention relates generally to communication systems in which the content is modulated on multiple carriers. The invention is not limited to specific transmission techniques, such as TDMA, FDMA or CDMA, or to specific analog or digital modulation techniques.

According to the present invention, samples of a signal of multiple carriers are created, using sampling technology as known in the prior art, e.g. a state-of-the-art Analog-Digital-Converter. These samples are arranged in such a way so that they form overlapping sample ranges. Each sample range includes $N$ samples, wherein $N$ is an integer. The amount of overlap of the sample ranges will be defined by an overlap-factor $M$. $M$ is defined by the relationship between the number of overlapping points $P$ and the number of samples $N$.

$$M = \frac{P}{N}$$

$P$ can range from minimal overlapping $P=1$ to a maximum overlapping $P=N-1$. As a result $M$ can range from $M=1/N$ to $M=(N-1)/N$.

The overlapping sample ranges are transformed from the time domain into the frequency domain. This transformation provides amplitude and/or phase values. The kind of values, that means only amplitude values or only phase values or amplitude and phase values depend on the employed modulation technique.

The number of the amplitude and/or phase values depends on the overlapping. Through the overlapping process $N$ samples deliver $V$ amplitude and/or $V$ phase values for each transmitted symbol compared to one amplitude and one phase value without overlapping. The number of delivered pairs of amplitude and phase values $V$ may be defined by the following formula:

$$V = \frac{1}{M} * \frac{T_{symbol}}{N * T_{sample}}$$

wherein $T_{symbol}$ represents the symbol time period and $T_{sample}$ the sample time period. These amplitudes and phase values can be obtained, if the sample ranges were transformed from the time domain into the frequency domain, for example by a Fourier-Transformation. According to a preferred embodiment of the present invention, the transforming step is carried out by a Fast-Fourier-Transformation.

In a next step, from the provided stream of pairs of amplitude and phase values for each carrier the transmitted content, for example digital symbols, will be extracted. According to the present invention the step of extracting the transmitted content from the stream of pairs of amplitude and phase values will be carried out by employing a statistical approach. Nevertheless according to the invention it is possible to carry out the extraction by employing a systematic approach.

Such a statistical approach for a QPSK System, for example, may be achieved in the following way: One phase value may be processed after another and may be associated to one quadrant in the QPSK constellation diagram. The number of phase values that lie sequentially in one quadrant may be determined. As already described above, V phase values are related to one specific symbol on an average basis. In order to determine the number of symbols which are related to a number of sequenced phase values that have been associated to one quadrant, an error value E may be defined. This value E may depend on V and the error tolerance of the system and can be defined accordingly. If now V +/- E sequenced phase values lie in one quadrant the likelihood that these values belong to one QPSK symbol is significantly high.

Based on this statistical approach a set of general rules can be defined to extract the digital symbols from the stream of phase values, in which $P$ is the number of phase values in one quadrant. In the following an example for a set of rules is presented wherein *floor* $(P/V)$ means the result of an integer division without remainder and *remainder*$(P/V)$ means the remainder of an integer division:

IF      $P > E$ phase values lie in a quadrant $Q_m$
THEN    $[floor(P/V) + (1$ IF *remainder*$(P/V) > E)]$ symbols lie in quadrant $Q_m$.
IF      $P <= E$ phase values lie in a quadrant $Q_m$ and the previous and the following phase values lie in quadrant $Q_n$,
THEN    Assign $P$ phase values to quadrant $Q_n$.
IF      $P <= E$ phase values lie in a quadrant $Q_m$ the previous phase values lie in quadrant $Q_n$ and the following phase values lie in quadrant $Q_0$,
THEN    Split $P$ phase values between quadrant $Q_n$ and $Q_0$.

These general rules may be refined for different values of $M$ and $E$ and adapted to the error tolerance of the system.

In contrast to the prior art, the created sample ranges are overlapping sample ranges. That means, each sample range includes parts of the received signal which have already been considered with the analysis of the last sample range.

In a preferred embodiment of the present invention, the extracting of the digital symbols is carried out by employing a maximum-likelihood decision. One example for such an maximum-likelihood decision is described by the above mentioned rules. Based on the present application of the method these rules may be improved.

Because of the overlapping of the samples, a rotation of the phase value for each carrier is provided. In order to achieve a correct phase value, the phase values provided by the transforming step will be corrected. One example for such a correction will be described below in connection with corresponding figures.

In order to define the initial phase offset inevitable in burst transmission carriers and rotation introduced by offsets of the carrier frequency, an initial known phase value will be employed. Such an initial known phase value will be broadcasted by the sender and employed by the receiver for the definition of the initial phase offset. The initial known phase value may be, for example, a predefined symbol sequence, which can also be called a Unique Word (UW). This UW will be detected by the receiver and based on this detection the receiver will correct the rotation introduced by the offsets of the carrier frequency. According to a preferred embodiment of the present invention, this predefined symbol sequence is located at the beginning of a burst.

In order to be able to correct the rotation caused by carrier frequency offset the UW can contain a series of symbols in one quadrant. By using linear regression or similar methods the slope and thereby the rotation of the phase values can be determined. This slope value can be used to derotate the phase values and hence eliminate the rotation caused by carrier frequency offsets. Attention has to be paid to the fact that the initial phase offset is unknown and the series of phase values used to correct the rotation introduced by carrier frequency offsets may cross a quadrant border. If the series crosses a quadrant border the series will not be detected as a series of symbols in one quadrant. To ensure that the series will be detected as a series of symbols in one quadrant the postprocessing-unit can observe both the original phase values received from the transforming-unit and those phase values shifted by a constant phase offset which guarantees that one of the two sets of phase values will not cross a quadrant border.

In order to carry out carrier offset error correction and carrier synchronization the data transmitted on each carrier can be extracted from the offset corrected and synchronized stream of amplitude and/or phase values. Error correction can then be performed, for example with the Reed Solomon algorithm, on this data. The extracted and error corrected data can then be passed to the next unit in the communication system, which may use or further process it.

The present invention includes also a system for carrying out a method according to the above described method for simultaneously demodulating a signal of multiple channels.

The system may comprise the following means:

- creating-means for creating overlapping sample ranges of the signal of the modulated multiple carriers,
- transforming-means for transforming said overlapping sample ranges from the time domain into the frequency domain, so that an amplitude and/or a phase value for each sample range and for each carrier are provided, and
- extracting-means for extracting the content from said amplitude and/or phase values.

These means may be part of a receiver unit (RU), a transforming unit (TU) and/or a postprocessing unit (PU).

Via the receiver unit (RU) the analog RF signal will enter the system. The signal comes from an arbitrary source and contains all carriers transmitted in the communication system. Depending on the location in the frequency spectrum the signal can be processed, for example, in the following ways: If the signal lies low enough in the frequency spectrum it can be downconverted and sampled directly using an undersampling analog-to-digital-converter (ADC). Alternatively, mixers and local oscillators followed by filters can be used to downconvert the signal into the baseband region and then sample it by an ADC.

In order to be able to process also unsynchronized and burst transmission carriers it is necessary to perform multiple transformations on overlapping sample ranges.

These overlapping sample ranges of the signal are passed to a transformation-unit (TU). In this TU a transformation from the time domain of the overlapping samples provided by the RU into the frequency domain will be performed. This transformation will be performed on each sample range and delivers one amplitude and one phase value for each of the transmitted carriers per transformation.

As already described together with the description of the method, this transformation is preferably performed by an algorithm like the Fast-Fourier-Transformation.

According to the present invention a post-processing-unit (PU) is provided which receives a stream of pairs of amplitude and phase values for each carrier and extracts the transmitted data from these values. To determine the presence of a symbol in a specific quadrant, the postprocessing-unit uses preferably a statistical approach.

The inventive system may further include units for performing functions described above in connection with the inventive method.

The present invention will be described as an example in the Figs. 1 to 9, in which:

Fig. 1: shows the structure of an embodiment of a multiple carrier demodulation system,

Fig. 2: shows the structure of an embodiment of a receiver-unit,

Fig. 3: shows a flow chart representing an example of a process within a transformation-unit,

Fig. 4: shows a flow chart representing an example of a process within a post-processing-unit,

Fig. 5: shows an example of the creation of overlapping sample ranges,

Fig. 6: shows three examples of symbol extraction according to an embodiment of a statistical approach,

Fig. 7: shows another example of symbol extraction according to an embodiment of a statistical approach,

Fig. 8: shows a diagram illustrating the creation of phase errors by overlapping sample ranges, and

Fig. 9: shows an example for initial phase and error correction according to one aspect of the present invention.

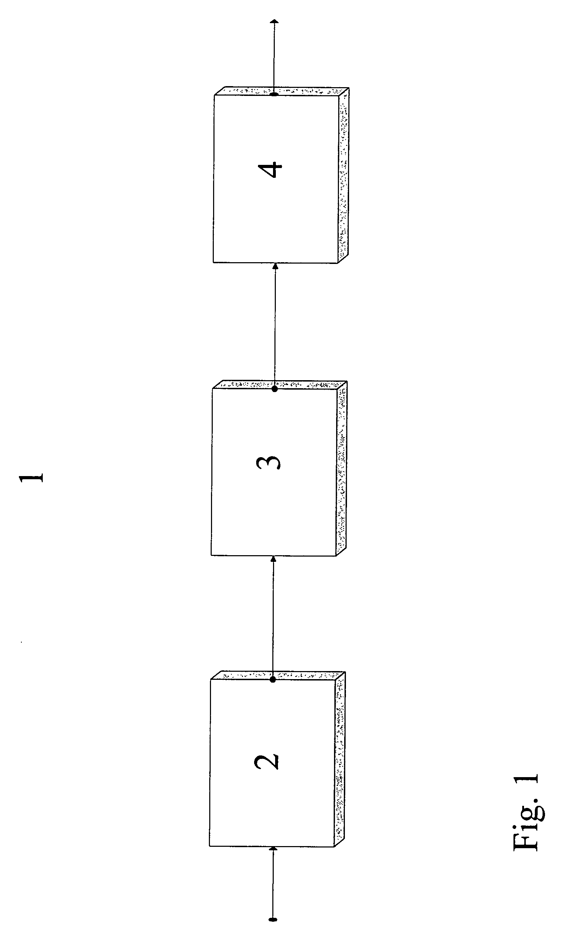

Fig. 1 shows an example for a multiple carrier demodulation system 1 according to the present invention. This demodulation system 1 comprises in this example three units. The first unit 2 is the receiver-unit (RU). The receiver-unit 2 receives analog signals from an antenna, a cable or other sources. In these analog signals all carriers are combined.

The output of the receiver-unit 2 is a digital sampled signal wherein all carriers are combined. This digital sampled signal is passed through the transformation-unit (TU) 3, in which a stream of pairs of amplitude and phase values for each carrier is provided.

The postprocessing-unit (PU) 4 processes this stream of pairs of amplitude and phase values and achieves the data, that means the digital symbols, which were transmitted with the different carriers.

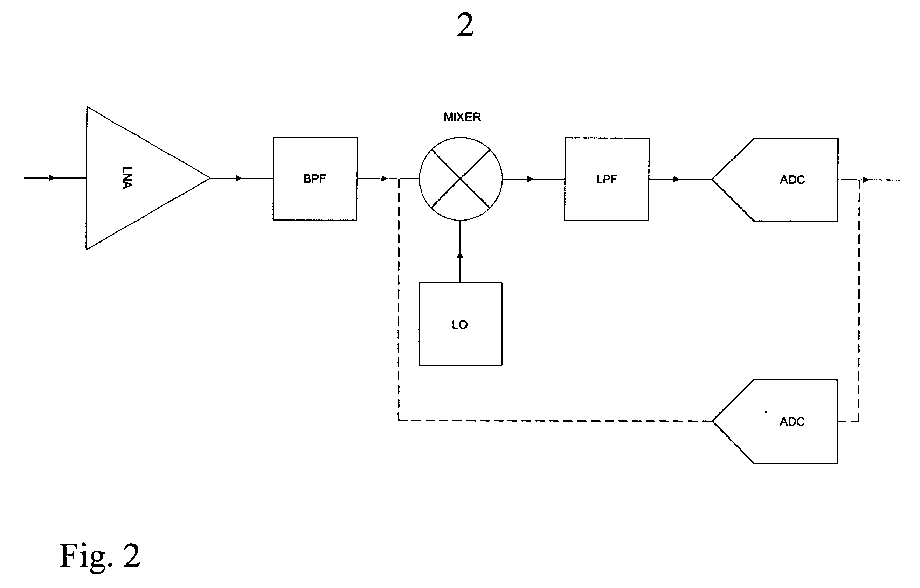

In Fig. 2 an example for the structure of a receiver-unit 2 is shown. The receiver-unit 2 receives the RF signal via a LNA (low noise amplifier) and a BPF (bandpass filter). Depending on the location of the signal in the frequency spectrum the RF signal will be downconverted into the baseband region by mixers and local oscillators followed by filters and then sampled by an ADC (analog-digital-converter) or downconverted and sampled directly by an undersampling ADC (dashed line).

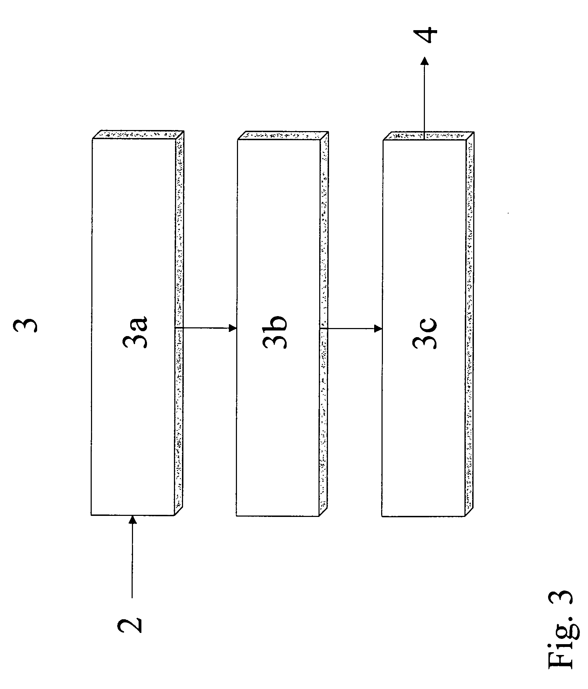

Fig. 3 shows a flow chart which represents an example of a process within a transformation-unit 3. Such a transformation-unit 3 receives as an input signal the sampled RF signal from the receiver-unit 2. Depending on the overlap-factor $M$ and the desired number of samples per range $N$, overlapping sample ranges are created in step 3a. On each of these overlapping sample ranges a transformation from the time-domain to the frequency domain is performed in step 3b. In the next step 3c the rotation which was introduced by the application of the overlapping sample ranges will be corrected and amplitude and/or phase values of each carrier calculated. These calculated amplitude and/or phase values for each carrier will be transmitted to the postprocessing-unit 4.

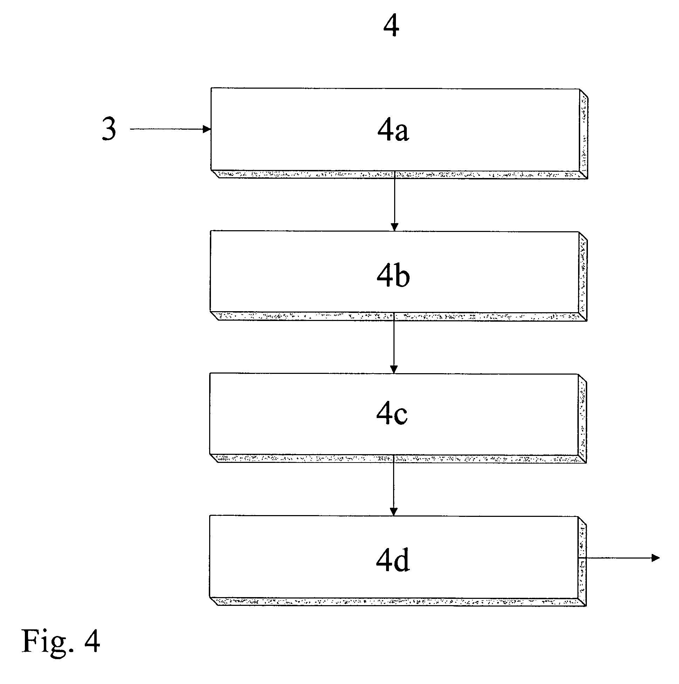

Fig. 4 shows a flow chart representing an example of a process within such a postprocessing-unit 4. The postprocessing-unit 4 receives the calculated amplitude and/or phase values of each carrier from the preceding transformation-unit 3. In a first step 4a the prostprocessing-unit 4 carries out the detection for possibly existing unique words. Based on detected unique words the postprocessing-unit 4 corrects in step 4b the initial phase and the rotation errors. After this correction of the amplitude and phase values the postprocessing-unit 4 starts the data extraction from these amplitude and phase values in step 4c. This extracted data may undergo a further data error correction in step 4d of the postprocessing-unit 4 before this data leaves the demodulation system for further processing or use.

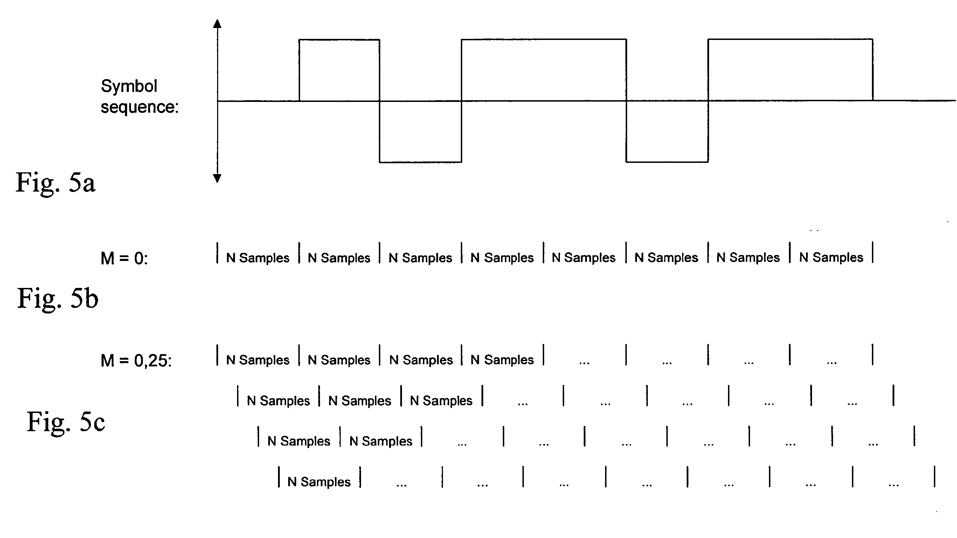

In the Figs. 5a-c an example for the creation of overlapping sample ranges is shown. In Fig. 5a an example for a symbol sequence as it may be transmitted over one carrier is presented. If the transmission of the data would be synchronized and continuous, as it is necessary for prior art demodulation systems, it would be sufficient to form ranges of N samples which start and end simultaneously with the transmitted symbols, as it is shown in Fig. 5b. Since the object of the present invention is to provide a system which is able to process also unsynchronized carriers, the creation of overlapping sample ranges is necessary. Depending on the chosen overlap-factor $M$, different overlapping sample ranges will be achieved. In Fig. 5c overlapping sample ranges are shown which have been created with an overlap-factor $M=0,25$. This means, one sample will be a member of exactly four sample ranges.

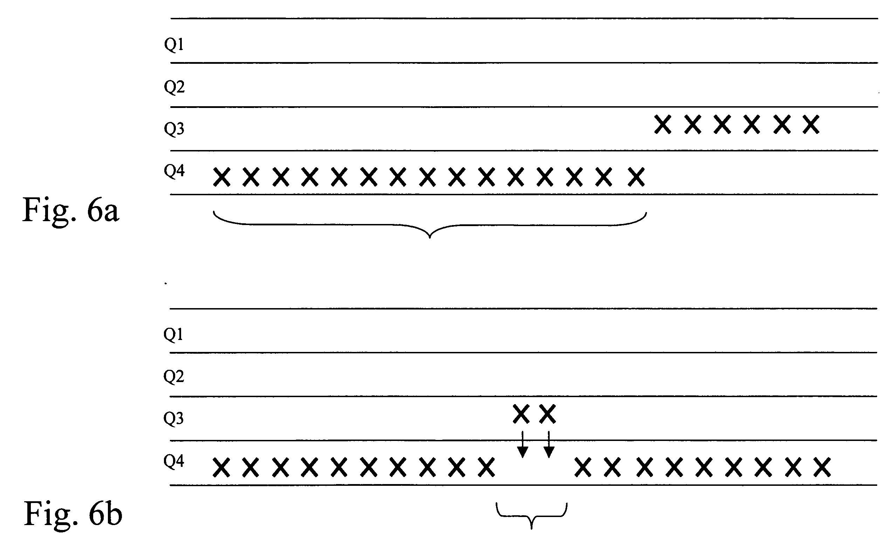

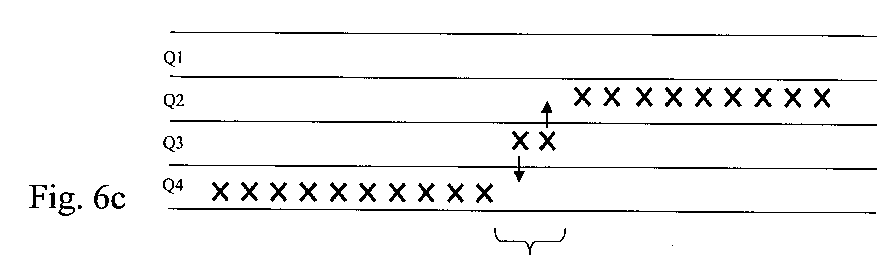

In Fig. 6 examples for the extraction of the content from phase values are shown. In these examples the above described set of rules are applied, wherein the number of phase values per symbol is defined as $V=6,5$ and the threshold error value is defined as $E=3$.

In the example shown in Fig. 6a 15 phase values lie in quadrant Q4 and the following values lie in quadrant Q3. According to the first above described rule, the number of phase values which lies in one quadrant must be higher then the threshold error value. Since in the present example 15 phase values lie in quadrant Q4 and the threshold error value is three, this condition is fulfilled. In order to find out the number of symbols which are represented by these phase values, the following operations have to be carried out. The division of $P$ and $V$ corresponds in this example to the division of 15 and 6,5. This results in the value 2 and the remainder 2. That means, that the two symbols lie in the quadrant Q4, since the value of the remainder is not more then the threshold error value.

In the example shown in Fig. 6b the number of phase values which lies in one quadrant, namely quadrant Q3, is less then the threshold error value and the phase values before and after theses phase values lie in the same quadrant, here quadrant Q4. According to the second above described rule, these phase values in quadrant Q3 have to be placed in the quadrant Q4. After this replacement of the phase values, the corresponding symbols will be determined according to the first rule.

In the example shown in Fig. 6c two phase values lie in the quadrant Q3 and the phase values before these two phase values lie in quadrant Q4 and the phase values after these two phase values lie in quadrant Q2. Under these circumstances the third above described rule says, that these two phase values have to be split up between the quadrant Q4 and Q2. In this example the first of these two phase values will be therefore placed in quadrant Q4 and the second in quadrant Q2.

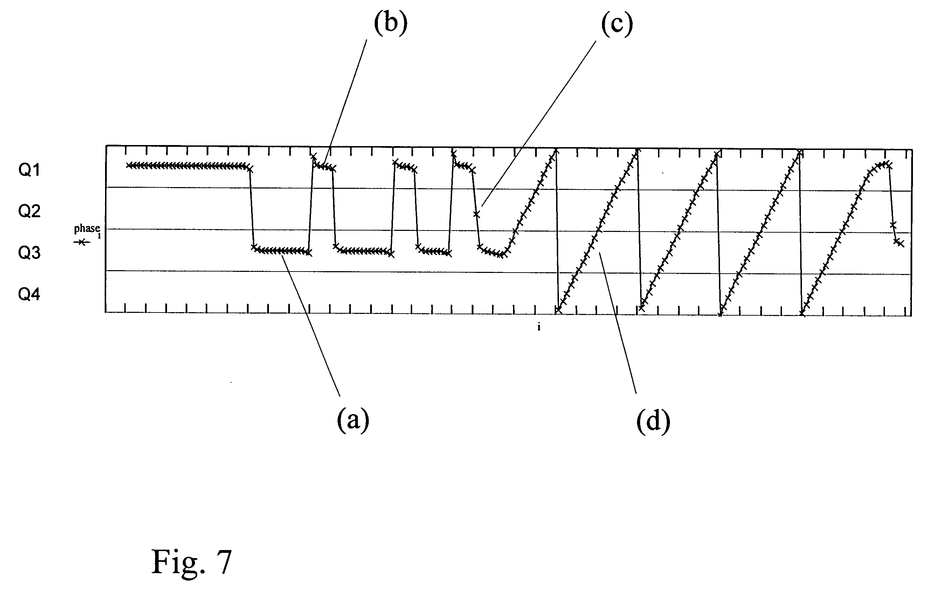

In Fig. 7 this step of extracting the content is shown with another example. In this figure one cross represents one phase value. In this example, the number of phase values for each transmitted symbol $V$ is five, and the threshold error value $E$ is two.

In order to explain the process of extracting the transmitted symbols, certain areas in this phase value diagram will be analyzed in detail. At area (a) in Fig. 7 15 phase values lie in the quadrant Q3. Since the number of phase values for each transmitted symbol V is, in this example, five in the extraction step, these phase values will be assigned to three symbols in this quadrant Q3.

In the area (b) in Fig. 7 6 phase values are detected in the quadrant Q1. Based on the number of phase values for each transmitted symbol $V=5$, a threshold error value $E$ has been defined which is in this example two. Since the difference between the number of phase values in the quadrant Q1 and the number of phase values for each transmitted symbol $V$ is within the range of the threshold error value, these six phase values will be assigned to one symbol in the quadrant Q1.

In the area (c) in Fig. 7 only one phase value lies in the quadrant Q2. According to the above mentioned general rules this single phase value has to be split between the quadrant of the phase values before it and the quadrant of the phase values behind it. Since this one phase value could not be split, it will be assigned to the following quadrant, which is in this example the quadrant Q3.

In the area (d) in Fig. 7 the five phase values are spread over the range of the quadrant Q3. But according to the above mentioned general rules this makes no difference to phase values which are all located at one point in the quadrant. Therefore, these five phase values will also be extracted to one symbol in this quadrant Q3.

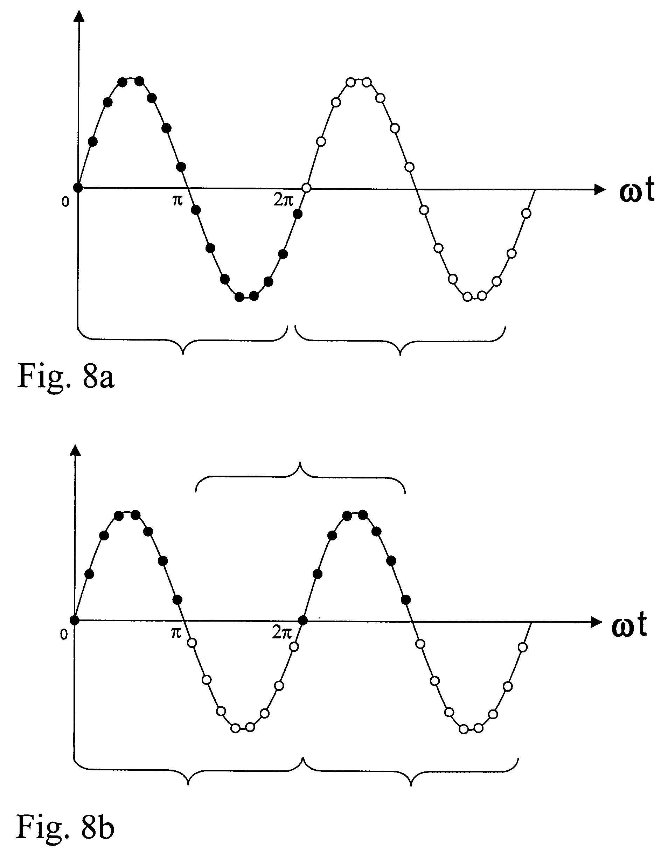

Fig. 8 shows an example for the rotation, which is introduced by the application of the overlapping sample ranges and which may be corrected in the above mentioned step 3c. Fig. 8a shows an example of a series of sample ranges without overlapping. In this case the Fourier Transformation will be carried out on the first 16 samples and the second 16 samples. Since the sample ranges always start at a multiple of $2\lozenge$ the corresponding phase values will be detected correctly. But if theses samples form overlapping sample ranges, such as indicated in Fig. 8b with an overlapping factor of 0,5, the phase values of the overlapping samples have to be corrected. In this example the correction corresponds to a subtraction of $\lozenge$.

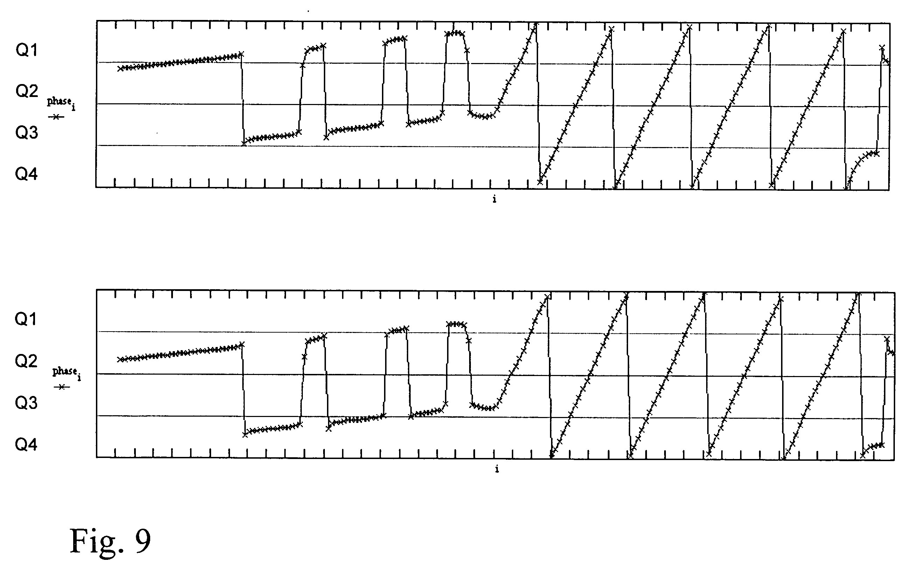

The diagram on the top of Fig. 9 shows an example where a series of phase values crosses the quadrant border from Q2 to Q1 and will not be detected as a series in one quadrant, as it may be correct.

In order to improve this stream of phase values different approaches can be employed. For example, it is possible to use the initial phase value of the series to correct the initial phase offset. If the set of phase values is shifted by $\pi/4$ the series of phase values does not cross the quadrant border and can be detected as a series in one quadrant. In addition, the slope of this series of phase values can be used to correct the rotation introduced by the carrier frequency offsets.

Therefore, the present invention provides a method and a system for simultaneously demodulating synchronous or asynchronous, continuous or burst carriers.

## Claims

1. Method for simultaneously demodulating a signal of modulated multiple carriers with content, comprising the following steps:

   - creating overlapping sample ranges of said signal of modulated multiple carriers,
   - transforming said overlapping sample ranges from the time domain into the frequency domain, so that an amplitude value and/or a phase value for each sample range and for each carrier are provided, and
   - extracting said content from said amplitude and/or phase values.

2. Method according to claim 1, wherein a statistical approach is employed for said extracting of said content.

3. Method according to claim 2, wherein said statistical approach employs a maximum-likelihood-decision.

4. Method according to any of the claims 1 to 3, wherein a rotation of the phase of each carrier introduced by the overlapping of the sample ranges is corrected.

5. Method according to any of the claims 1 to 4, wherein an initial phase offset is corrected by the use of an initial known phase value.

6. Method according to claim 5, wherein said initial known phase value is determined with a predefined symbol sequence.

7. Method according to any of the claims 1 to 6, wherein a carrier offset error correction is performed on the transformed overlapping sample ranges.

8. Method according to any of the claims 1 to 7, wherein a carrier synchronization is performed on the transformed overlapping sample ranges.

9. System for simultaneously demodulating a signal of modulated multiple carriers with content, wherein the system comprises the following means:

   - creating-means for creating overlapping sample ranges of the signal of the modulated multiple carriers,
   - transforming-means for transforming said overlapping sample ranges from the time domain into the frequency domain, so that an amplitude and/or a phase value for each sample range and for each carrier are provided, and
   - extracting-means for extracting said content from said amplitude and/or phase values.

Fig. 1

Fig. 2

EP 1 292 062 A1

3

Fig. 3

EP 1 292 062 A1

Fig. 4

Symbol sequence:

Fig. 5a

M = 0:

| N Samples | N Samples | N Samples | N Samples | N Samples |

Fig. 5b

M = 0,25:

| N Samples | N Samples | N Samples | N Samples |

| N Samples | N Samples |

| N Samples |

Fig. 5c

Fig. 6a

Fig. 6b

Fig. 6c

Fig. 7

EP 1 292 062 A1

Fig. 8a

Fig. 8b

Fig. 9

**European Patent Office**

**EUROPEAN SEARCH REPORT**

Application Number

EP 01 12 1607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 848 097 A (CARNEY RONALD R ET AL) 8 December 1998 (1998-12-08) <br> * abstract * <br> * column 5, line 16 - line 39 * <br> * column 6, line 30 - line 49 * <br> * column 8, line 49 - column 9, line 3 * <br> * column 9, line 16 - line 35 * <br> * column 14, line 33 - line 51 * | 1-9 | H04L5/06 |
| A | KUMAR R ET AL: "Signal processing techniques for wideband communications systems" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA, IEEE, US, 31 October 1999 (1999-10-31), pages 452-457, XP010369623 ISBN: 0-7803-5538-5 * page 455, column 1, paragraph 3 - page 456, column 1 * | 1-9 | |
| A | JACKSON E M ET AL: "Advanced HF ant-jam network architecture" IEEE CONFERENCE JOURNAL, 1990, pages 0207-0211, XP010002774 * page 2211, column 1, paragraph 2 * | 1-9 | TECHNICAL FIELDS SEARCHED (Int.Cl.7) <br> H04L <br> H04J |
| A | US 6 285 720 B1 (MARTONE MASSIMILIANO MAX) 4 September 2001 (2001-09-04) * abstract * <br> * column 2, line 29 - line 38 * <br> * column 4, line 24 - line 48 * <br> * claims 16,17 * | 2,3 | |

-/--

The present search report has been drawn up for all claims

| Place of search | Date of completion of the search | Examiner |
|---|---|---|
| THE HAGUE | 18 February 2002 | Reilly, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 01 12 1607

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | EP 0 967 763 A (CIT ALCATEL) 29 December 1999 (1999-12-29) * paragraph '0027! * * paragraph '0037! * ----- | 4-6 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 18 February 2002 | Reilly, D |

EP 1 292 062 A1

**ANNEX TO THE EUROPEAN SEARCH REPORT
ON EUROPEAN PATENT APPLICATION NO.** EP 01 12 1607

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2002

| Patent document cited in search report | | Publication date | Patent family member(s) | | Publication date |
|---|---|---|---|---|---|
| US 5848097 | A | 08-12-1998 | US | 5535240 A | 09-07-1996 |
| | | | AU | 719898 B2 | 18-05-2000 |
| | | | AU | 7981894 A | 22-05-1995 |
| | | | CA | 2175242 A1 | 04-05-1995 |
| | | | CA | 2250554 A1 | 04-05-1995 |
| | | | DE | 726000 T1 | 12-12-1996 |
| | | | EP | 0726000 A1 | 14-08-1996 |
| | | | FI | 961777 A | 26-06-1996 |
| | | | JP | 9507618 T | 29-07-1997 |
| | | | JP | 2001313545 A | 09-11-2001 |
| | | | WO | 9512261 A1 | 04-05-1995 |
| | | | US | 5606575 A | 25-02-1997 |
| US 6285720 | B1 | 04-09-2001 | AU | 4697000 A | 18-12-2000 |
| | | | WO | 0074264 A1 | 07-12-2000 |
| | | | US | 2002003843 A1 | 10-01-2002 |
| EP 0967763 | A | 29-12-1999 | EP | 0969637 A1 | 05-01-2000 |
| | | | EP | 0967763 A1 | 29-12-1999 |
| | | | JP | 2000115124 A | 21-04-2000 |
| | | | AU | 3681599 A | 13-01-2000 |